# EUROPÄISCHE PATENTSCHRIFT

(11) **EP 0 508 233 B1**
(45) Veröffentlichungstag und Bekanntmachung des Hinweises auf die Patenterteilung: **28.08.1996**
(21) Anmeldenummer: 92105262.7
(22) Anmeldetag: 27.03.1992
(51) Int. Cl.: C07F 9/655

(54) **Trocknungsverfahren zur Herstellung von Ascorbinsäure-2-Monophosphaten**
Process for preparing ascorbic acid-2-monophosphate by drying
Procédé de préparation de monophosphate-2-d'acide ascorbique par séchage

(30) Priorität: 10.04.1991 CH 1072/91
(43) Veröffentlichungstag der Anmeldung: 14.10.1992
(73) Patentinhaber: F. HOFFMANN-LA ROCHE AG, 4002 Basel (CH)
(72) Erfinder: Leuenberger, Bruno, CH-4057 Basel (CH)
(74) Vertreter: Urech, Peter, Dr.

(56) Entgegenhaltungen:
- WO-A-87/00172

## Beschreibung

Die Erfindung betrifft ein Verfahren zur Herstellung von Ascorbinsäure-2-monophosphaten (ASMP) aus Ascorbinsäure-2-triphosphaten (ASTP); es ist dadurch gekennzeichnet, dass man ein ASTP, insbesondere als wässrige Lösung, trocknet.

Man macht dabei zweckmässigerweise von Sprühtrocknung, Walzentrocknung, Fliessbetttrocknung oder Bandtrocknung Gebrauch und verwendet hierbei zweckmässigerweise die dem Fachmann bekannten handelsüblichen Apparaturen. Bevorzugt ist die Sprühtrocknung.

Die geeigneten Temperaturen sind dabei ca. 110°C bis ca. 200°C.

Die geeigneten Parameter sind aus folgender Zusammenstellung ersichtlich.

| | | |
|---|---|---|
| Sprühtrocknung ²⁾ | Lufteintritt: | ca. 200-160°C |
| | | insb. ca. 180°C |
| | Luftaustritt: | ca. 150-110°C |
| | | insb. ca. 120°C |
| Walzentrocknung | | ca. 120-160°C |
| Bandtrocknung | | ca. 120-160°C |

| | | |
|---|---|---|
| ²⁾ für Fliessbetttrocknung gelten analoge Werte | | |

Eingesetzt wird das Ausgangsmaterial zweckmässigerweise als wässrige Lösung, zweckmässigerweise in einem pH-Bereich von ca. 4 bis ca. 7, insbesondere von ca. 5,5 bis ca. 6,5.

Die Wahl des Kations ist nicht kritisch. Im Vordergrund des Interesses sind aber Alkalimetall- und Erdalkalimetallkationen, insbesondere Natrium und Calcium.

Die wässrige Lösung weist zweckmässigerweise einen Feststoff-Gehalt von ca. 10-80 Gew.%, insbesondere von ca. 40-60 Gew.% auf. Solche Lösungen sind beispielsweise gemäss EP-A 229154 vom 22.7.87 zugänglich, also aus Ascorbinsäure durch Umsetzung mit einem löslichen Salz von Metaphosphorsäure.

Gemäss EP-PS 229154 ist es zwar möglich, ASMP durch saure Hydrolyse von ASTP zu gewinnen. Ueberraschend ist, dass nun auch durch einfache Trocknung praktisch vollständige Ueberführung von ASTP in ASMP bewerkstelligt werden kann, und auf diese Weise ein handelsübliches, lagerstabiles Produkt entsteht. Der Gehalt dieses Produktes an ASTP ist durchwegs ≦ 10%. Es ist aber auch möglich, auf ca. 1 Gew.% zu kommen.

### Beispiel

Gemäss EP-PS 229154, Beispiel 1 wird eine wässrige Lösung von ASTP (s.u.) hergestellt, wobei von 55 kg AS (s.u.) ausgegangen wird. Man bringt die Lösung auf einen pH-Wert von 6,5-5,5, dann wird unter Verwendung eines Niro-Trockners (Niro Atomizer, DK 2860 Söborg) sprühgetrocknet, und zwar mit einer Lufteintriff-Temperatur von 180°C und einer Luftaustritt-Temperatur von 120°C. Die Analyse ergibt folgendes Bild:

| ASxP: | AS | ASMP | ASDP | ASTP |
|---|---|---|---|---|
| vor ST: | 0,6% | 0,0% | 0,7% | 11,0% |
| nach ST: | 1,2% | 7,3% | 2,4% | 1,0% |
| ASxP: Ascorbinsäurephosphat (Typ) AS: Ascorbinsäure ASMP: Ascorbinsäure-monophosphat ASDP: Ascorbinsäure-diphosphat ASTP: Ascorbinsäure-triphosphat %: die Angaben sind als AA-Aequivalente ausgedrückt, d.h. als Gewichtsprozente Ascorbinsäure-aequivalente, bezogen auf die Trockensubstanz, zu verstehen. So ist z.B. die Angabe 11% ASTP dahingehend zu interpretieren, dass das entsprechende Produkt, auf den Feststoffgehalt bezogen, 11% Ascorbinsäure in der Form von Ascorbinsäure-tri-phosphat enthält. ST: Sprühtrocknung | | | | |

## Patentansprüche

1. Verfahren zur Herstellung von Ascorbinsäure-2-monophosphaten (ASMP) aus Ascorbinsäure-2-triphosphaten (ASTP), dadurch gekennzeichnet, dass man ein ASTP, insbesondere als wässrige Lösung, trocknet.

2. Verfahren nach Anspruch 1, dadurch gekennzeichnet, dass man von Sprühtrocknung, Walzentrocknung, Bandtrocknung oder Fliessbetttrocknung Gebrauch macht.

3. Verfahren nach Anspruch 1 oder 2, dadurch gekennzeichnet, dass man bei Temperaturen von ca. 110° bis ca. 200°C, insbesondere von ca. 120° bis ca. 180°C trocknet.

4. Verfahren nach einem der Ansprüche 1-3, dadurch gekennzeichnet, dass man ein Alkalimetall- oder ein Erdalkalimetallsalz trocknet.

5. Verfahren nach einem der Ansprüche 1-4, dadurch gekennzeichnet, dass die wässrige Lösung einen pH-Wert von ca. 4 bis ca. 7, insbesondere von ca. 5,5 bis ca. 6,5 aufweist.

6. Verfahren nach einem der Ansprüche 1-3, dadurch gekennzeichnet, dass die wässrige Lösung zu ca. 10-80 Gew.%, insbesondere zu ca. 40-60 Gew.% aus ASTP besteht.

7. Verfahren nach einem der Ansprüche 1-6, dadurch gekennzeichnet, dass man das ASTP aus Ascorbinsäure durch Umsetzung mit einem löslichen Salz von Metaphosphorsäure erhält.

## Claims

1. A process for the manufacture of ascorbic acid 2-monophosphates (AAMP) from ascorbic acid 2-triphosphates (AATP), characterized by drying an AATP, especially as an aqueous solution.

2. A process according to claim 1, characterized in that the drying is carried out by spray drying, spin drying, belt drying or fluidized bed drying.

3. A process according to claim 1 or 2, characterized in that the drying is carried out at temperatures of about 110° to about 200°C, especially of about 120° to about 180°C.

4. A process according to any one of claims 1-3, characterized in that an alkali metal salt or an alkaline earth metal salt is dried.

5. A process according to any one of claims 1-4, characterized in that the aqueous solution has a pH value of about 4 to about 7, especially of about 5.5 to about 6.5.

6. A process according to any one of claims 1-5, characterized in that the aqueous solution consists of about 10-80 wt.%, especially of about 40-60 wt.%, of AATP.

7. A process according to any one of claims 1-6, characterized in that the AATP is obtained from ascorbic acid by reaction with a soluble salt of metaphosphoric acid.

## Revendications

1. Procédé pour la préparation d'acide ascorbique 2-monophosphates (ASMP) à partir d'acide ascorbique 2-triphosphates (ASTP), caractérisé en ce que l'on sèche un ASTP, en particulier sous forme de solution aqueuse.

2. Procédé selon la revendication 1, caractérisé en ce que l'on utilise un séchage par atomisation, un séchage sur cylindre, un séchage sur bande ou un séchage en lit fluidisé.

3. Procédé selon la revendication 1 ou 2, caractérisé en ce que l'on effectue le séchage à des températures d'environ 110 à environ 200°C, en particulier d'environ 120 à environ 180°C.

4. Procédé selon l'une des revendications 1 à 3, caractérisé en ce que l'on sèche un sel alcalin ou alcalino-terreux.

5. Procédé selon l'une des revendications 1 à 4, caractérisé en ce que la solution aqueuse présente un pH d'environ 4 à environ 7, en particulier d'environ 5,5 à environ 6,5.

6. Procédé selon l'une des revendications 1 à 3, caractérisé en ce que la solution aqueuse est constituée à environ 10-80 % en poids, en particulier à environ 40-60 % en poids d'ASTP.

7. Procédé selon l'une des revendications 1 à 6, caractérisé en ce que l'on obtient l'ASTP à partir d'acide ascorbique par la réaction avec un sel soluble d'acide méta-phosphorique.
